# EUROPÄISCHE PATENTSCHRIFT

(11) **EP 3 433 183 B1**
(45) Veröffentlichungstag und Bekanntmachung des Hinweises auf die Patenterteilung: **29.04.2020**
(21) Anmeldenummer: 16770681.1
(22) Anmeldetag: 15.09.2016
(51) Int. Cl.: B65D 77/06

(54) **INLINER FÜR PALETTENCONTAINER**
INLINER FOR A PALLET CONTAINER
POCHE POUR CAISSES-PALETTES

(30) Priorität: 24.03.2016 DE 202016001876 U
(43) Veröffentlichungstag der Anmeldung: 30.01.2019
(73) Patentinhaber: Mauser-Werke GmbH, 50321 Brühl (DE)
(72) Erfinder: WEYRAUCH, Detlev, 52372 Kreuzau-Untermaubach (DE)
(86) Internationale Anmeldenummer: PCT/EP2016/001547
(87) Internationale Veröffentlichungsnummer: WO 2017/162258

(56) Entgegenhaltungen:
- EP-A1- 0 415 719
- EP-A1- 2 090 528
- WO-A2-2011/002925
- DE-U1-202014 007 695
- JP-A- 2005 289 464

## Beschreibung

Die Erfindung betrifft einen kubusförmigen flexiblen Inliner (im Folgenden alternativ auch als "Foliensack" bezeichnet) mit oberem Einfüllstutzen und unterem Entnahmestutzen für einen Palettencontainer (im Folgenden kurz als "IBC" bezeichnet) zur Lagerung und zum Transport von insbesondere gefährlichen flüssigen oder fließfähigen Füllgütern, mit einem dünnwandigen starren Innenbehälter aus thermoplastischem Kunststoff, mit einem den Kunststoff-Innenbehälter als Stützmantel dicht umschließenden Rohr-Gitterrahmen aus miteinander verschweißten horizontalen und vertikalen Rohrstäben und mit einer rechteckigen Bodenpalette, auf welcher der Kunststoffbehälter aufliegt und mit welcher der Rohr-Gitterrahmen fest verbunden ist, wobei der rechteckförmige Kunststoffbehälter zwei längere Seitenwandungen, eine kürzere Rückwandung, eine kürzere Vorderwandung, einen Oberboden mit verschließbarem Einfüllstutzen und einen Behälterboden aufweist, wobei bodenseitig in der Mitte der Vorderwandung ein unterer Entnahmebereich mit einer nach innen in den Kunststoff-Innenbehälter hinein gerichteten, schutzgehäuseförmigen Einformung (im Folgenden auch synonym als "Entnahmearmatur-Schutzgehäuse") zur geschützten zurückversetzten Anordnung einer verschließbaren Entnahmearmatur vorgesehen ist.

### Problematik:

In der chemischen Industrie werden Palettencontainer bzw. IBCs in großem Umfang vorwiegend zum Transport von flüssigen Chemikalien eingesetzt. Diese chemischen Produkte sind zum größten Teil als gefährliche flüssige Füllgüter eingestuft, weil sie in konzentrierter Form für Mensch und Tier gesundheits- und umweltgefährdend sind. Bei der Lagerung und beim Transport in IBCs können die Chemikalien das HDPE-Material der Kunststoff-Innenbehälter derart belasten wie z. B. verfärben, verunreinigen oder beschädigen, dass die gebrauchten Innenbehälter nicht einfach gewaschen und weiter verwendet werden können. Bei einer üblichen Mehrfachverwendung von gebrauchten IBCs bleibt dann nur noch ein Austausch des geschädigten Kunststoff-Innenbehälters gegen einen neuen Innenbehälter. Wenn man bedenkt, dass ein Kunststoff-Innenbehälter je nach Anforderungsprofil ca. 14 kg bis 18 kg wiegen kann, stellt das allerdings eine kostenträchtige Lösung mit nicht unerheblicher Verschwendung von Kunststoffmaterial dar. Eine kostengünstigere Lösung besteht z. B. darin, den Kunststoff-Innenbehälter mittels eines eingesetzten dünnen Inliners bzw. Foliensacks vor einer Verunreinigung durch das jeweilige Füllgut zu schützen und dadurch eine mehrfache Weiter- bzw. Wiederverwendung des Innenbehälters zu ermöglichen. Dann braucht nur noch der verunreinigte Inliner entsorgt zu werden, der je nach Foliendicke für einen 1000 Liter IBC lediglich ein Gewicht von ca. 0,7 bis 1,3 kg seiner Kunststoffmasse aufweist, und ein neuer Inliner für eine Weiterbenutzung des IBC eingesetzt zu werden.

Das Einsetzen von dünnwandigen Foliensäcken bzw. Inlinern in starre kastenförmige Außenbehälter wie z. B. große steife Kartonagen-Kisten oder Papp-Kartons (bag in box) ist eine seit Jahren übliche Maßnahme. Allerdings gibt es für quadratförmige oder rechteckförmige Außenbehälter immer nur "einfach gestrickte" zylinderförmige, kubische oder kissenförmige Inliner. Diese sind ohne Probleme für Behälter zu verwenden, die ein außensitzendes Entnahmesystem besitzen. Für Palettencontainer bzw. IBCs mit blasgeformten steifen bzw. starren Kunststoff-Innenbehältern mit nach innen in den Innenbehälter eingeformtem Schutzgehäuse für eine zurückversetzte und gegen äußere Einwirkungen geschützte Entnahmearmatur werden diese einfachen Inliner ebenfalls verwendet, aber sie sind dann problematisch, weil sie bei ihrem Handling mit Einbau, Befüllung, Entnahme und Ausbau aus dem starren IBC-Innenbehälter ständig zu Problemen führen, insbesondere kommt es dabei zwangsläufig zu einer Faltenbildung im Bereich um den unteren Entnahmestutzen.

### Stand der Technik:

Aus der Druckschrift EP 2 090 528 A1 ist die Verwendung eines kubusförmigen Inliners aus dünner Kunststoff-Folie in einem starren Kunststoff-Innenbehälter mit eingeformten Schutzgehäuse für die Entnahmearmatur eines üblichen Palettenbehälters bekannt. Dabei geht es insbesondere um die sichere Fixierung des dünnwandigen Inliner-Entnahmestutzens in dem starren Entnahme-Stutzen des Kunststoff-Innenbehälters mit Hilfe der aufgeschraubten Entnahmearmatur. Dazu wird der vordere Rand des dünnen Folienschlauchs von einer Ringschulter in der Gehäuse-Schraubmutter der Entnahmearmatur mit Dichtflansch und Dichtlippe stirnseitig auf der auf den Bottle-Entnahmestutzen aufgeschweißten Gewindehülse (mit Außengewinde) eingeklemmt. Wenn man allerdings die Gehäuse-Schraubmutter zum Aufschrauben ansetzt, kann man den umgelegten Rand des dünnen Folienschlauchs nicht mehr festhalten und nicht mehr sehen; dabei kann er leicht verrutschen oder gar Falten bekommen. Dagegen sollen kleine Noppen auf dem Folienrand und entsprechende Vertiefungen in der Gewindehülse-Stirnwandung helfen. Die Fixierung und Verdrehsicherung des Inliner-Entnahmestutzen erfolgt jedenfalls nur durch Klemmung nach vollständigem Anziehen des Gewindes der Gehäuse-Schraubmutter. Gleichzeitig muss sichergestellt werden, dass der Öffnungs-Hebel der Entnahmearmatur exakt in der Vertikalen steht.

Bei einem anderen aus der US 6,55,657 B1 bekannten Großbehälter hat man die unerwünschte Faltenbildung des kubusförmigen Inliners im Bereich des Schutzgehäuses für die Entnahmearmatur innerhalb des Kunststoff-Innenbehälters als nachteilig erkannt und hat als vermeintlich geeignete Gegenmaßnahme den dünnwandigen Entnahmestutzen des Inliners nicht im bodenseitigen Nahbereich der Inliner-Vorderwandung sondern vielmehr dicht an den vorderseitigen Rand des Unterbodens des kubusförmigen Inliners positioniert. Beim Einsetzen des Inliners in den starren Innenbehälter des IBCs wird dann der vorderseitige Rand des Unterbodens rechtwinklig hochgeklappt und der dünnwandige Entnahmestutzen des Inliners durch den starren Entnahmestutzen des Innenbehälters hindurchgeführt und fixiert. Dadurch kann aber der Inliner nicht vollflächig an der Vorderwandung des Innenbehälters anliegen und es verbleiben unterhalb des Inliners Freiräume bzw. Hohlräume seitlich neben dem Schutzgehäuse des Innenbehälters. Bei zunehmender Befüllung des IBC wird der kubusförmige Inliner natürlich auf das Schutzgehäuse und seitlich daneben auf den Boden des starren Innenbehälters gepresst. Dabei zieht sich der Inliner auch hier zwangsläufig aus den seitlichen Eckbereichen des starren Innenbehälters heraus und es kommt auch hier zu Faltenbildungen des dünnwandigen Inliners, wenn vielleicht auch mehr zu beiden Seiten hin und nicht mehr direkt vor der Auslassöffnung des Entnahmestutzens. Somit ist auch hier das Problem der Faltenbildung nicht vollständig gelöst.

Bei allen bekannten IBCs sind die dünnwandigen Inliner mit ihrem unteren flexiblen Entnahmestutzen am unteren starren Entnahmestutzen und oben mit ihrem flexiblen Einfüllstutzen am oberen starren Einfüllstutzen des Kunststoff-Innenbehälters befestigt und hängen ansonsten frei von oben nach unten. Bei einer Befüllung des Palettencontainers - egal ob von oben oder unten bei sogenannter "Bodenfüllung" wird das flüssige Füllgut meist mit noch erhöhten Prozess-Temperaturen unter Druck bzw. mit scharfem Strahl in den Inliner eingefüllt. Dabei tritt oftmals ein starkes Flattern des Folienmaterials auf. Der Inlinerboden wird aus den Behälterecken herausgezogen und es bilden sich Falten, die später bei einer Füllgutentnahme die bodenseitige Entnahmeöffnung zusetzen können. Je nach Befüllungsgrad schwabbelt der Inliner mitsamt seinem flüssigen Inhalt aufgrund von außen einwirkenden Transportschwankungen im Kunststoff-Innenbehälter hin und her, so dass oftmals schwankende Zugbelastungen auf den oberen Einfüllstutzen des Inliners einwirken und das Folienmaterial einreißen kann. Um diesem Phänomen vorzubeugen müssen teure stressresistente Folienmaterialien für die Herstellung der Inliner verwendet werden. Leider haben Verbundfolien mit hohen Barriereeigenschaften nur eine sehr schlechte Stress-Resistenz und können für viele Anwendungen nicht eingesetzt werden.

### Aufgabe:

Der vorliegenden Erfindung liegt die Aufgabe zugrunde, die Verwendung von Inlinern in Palettencontainern (IBCs) zu erleichtern und insbesondere eine Faltenbildung des Inliners im Inneren des starren Innenbehälters mit hoher Sicherheit zu vermeiden.

### Lösung:

Diese Aufgabe wird mit den speziellen Merkmalen des Patentanspruchs 1 gelöst. Die Merkmale in den Unteransprüchen beschreiben weitere vorteilhafte Ausgestaltungsmöglichkeiten des erfindungsgemäßen Inliners. Die vorgeschlagene technische Lehre eröffnet eine verbesserte Handhabungssicherheit von mit formangepassten Inlinern ausgestatteten IBCs mit nach innen in den Innenbehälter eingeformtem Schutzgehäuse für eine zurückversetzte geschützte Anordnung der Entnahmearmatur innerhalb des äußeren Gitterkäfigs des Palettencontainers. Es hat sich herausgestellt, dass Kunden eine Verwendung von dünnwandigen Inlinern in IBCs ablehnen, wenn es dabei häufig zu Undichtigkeiten des Inliners und Störungen bei der Füllgutentnahme kommt. Solche Undichtigkeiten und Störungen entstehen oftmals aufgrund von Faltenbildung des Inliners, die zur Verstopfung des Entnahmestutzen des Innenbehälters führt.

Durch die konstruktiven Maßnahmen der vorliegenden Erfindung wird eine Werterhaltung von hochwertigen, mehrfach nutzbaren Kunststoff-Innenbehältern durch eine störungsfreie Verwendung von kostengünstigen Inlinern bzw. Foliensäcken ermöglicht, so dass in Hinblick auf wertvolle blasgeformte Kunststoff-Innenbehälter kein Material mehr verschwendet wird.

Dies wird in effektiver Weise dadurch bewirkt, dass der kubusförmige flexible Inliner im unteren Entnahmebereich eine nach innen gerichtete, der schutzgehäuseförmigen Einformung des starren Kunststoff-Innenbehälters anpassbare Wandungs-Einbuchtung mit zwei seitlichen Wandungsteilen, einem oberen und einem rückwärtigen Wandungsteil mit daran angeformtem flexiblen Entnahmestutzen aufweist, die es ermöglichen, die zur passgenauen Anlage an die innere Oberfläche der ins Innere des starren Kunststoffbehälters ragenden Einformung des Entnahmearmatur-Schutzgehäuses angepasste Wandungs-Einbuchtung auszubilden. Dadurch gibt es keine Hohlräume unter oder seitlich neben dem noch leeren Inlinerboden, die bei fortlaufender Befüllung von bekannten IBCs mit flüssigem Füllgut immer ausgefüllt werden und zwangsläufig zu Verzerrungen und Faltenbildung des Inliners führen.

In konstruktiver Ausgestaltung der Erfindung ist hierbei in zweckmäßiger Weise vorgesehen, dass der kubusförmige flexible Inliner aus drei Zuschnittsteilen zusammengeschweißt ist und dazu ein oberes horizontales Deckelteil mit einem zentralmittigen Einfüllstutzen, ein unteres horizontales Bodenteil mit einer der Bodenform der Wandungs-Einbuchtung entsprechenden Aussparung und ein vertikal umlaufendes Seitenwandungs-Zuschnittsteil mit Flächenanteilen für die zwei seitlichen Wandungsteile, sowie das obere und das rückwärtige Wandungsteil der Wandungs-Einbuchtung des Inliners umfasst.

In einer fertigungstechnischen Ausgestaltung der Erfindung ist vorgesehen, dass die drei Zuschnittsteile mit jeweils einer an der Außenkante des oberen Deckelteils und an der Außenkante des unteren Bodenteils horizontal umlaufenden Schweißnaht und zum Verschließen des Seitenwandungs-Zuschnittsteils mit einer in der Mitte der Vorderwandung und durch die Mitte der Wandungs-Einbuchtung vertikal von oben nach unten verlaufenden Schweißnaht zusammengeschweißt sind.

In einer anderen bevorzugten fertigungstechnischen Ausgestaltung der Erfindung ist vorgesehen, dass die drei Zuschnittsteile mit jeweils einer an der Außenkante des oberen Deckelteils und an der Außenkante des unteren Bodenteils horizontal umlaufenden Schweißnaht und zum Verschließen des Seitenwandungs-Zuschnittsteils mit einer in der Mitte der Rückwandung vertikal von oben nach unten verlaufenden Schweißnaht zusammengeschweißt sind, wobei in der Mitte der Vorderwandung eine vertikal von oben nach unten bis auf die Wandungs-Einbuchtung verlaufende Abschweißung zur Entfernung von oberhalb der Wandungs-Einbuchtung überschüssigem Folienanteil vorgesehen ist. Bei der Inlinerfertigung mit Abschweißung verläuft die Schweißnaht der Abschweißung in vorteilhafter Weise nicht durch das obere und rückwärtige Wandungsteil der Wandungs-Einbuchtung des Inliners. Auch ist dann die Position des aufgeschweißten ringscheibenförmigen Flanschrandes des flexiblen Inliner-Entnahmestutzen frei von einer durchlaufenden vertikalen Schweißnaht.

In überraschender Weise ist bei dem erfindungsgemäßen Inliner die Länge der oberen horizontalen Schweißnaht kürzer ausgebildet als die Länge der unteren horizontalen Schweißnaht, bzw. ist der obere Schweißnahtumfang des oberen Deckelteils kürzer ausgebildet als der untere Schweißnahtumfang des unteren Bodenteils, und die vorderseitige vertikale Schweißnaht des Seitenwandungs-Zuschnittsteils ist länger ausgebildet als die Höhe des Inliner-Kubus. Das wird ermöglicht durch eine Integration der Flächenanteile für die zwei seitlichen Wandungsteile, sowie das obere und das rückwärtige Wandungsteil der Wandungs-Einbuchtung des Inliners in das vertikal umlaufende Seitenwandungs-Zuschnittsteil. Das erfordert zwar etwas mehr Verschnitt an Folienmaterial und eine gekrümmte Schweißnaht in dem oberen und rückwärtigen Wandungsteil der Wandungs-Einbuchtung, aber es erspart eine aufwändige Verschweißung von vier einzelnen kleinen Wandungsteilen der Wandungs-Einbuchtung.

Gemäß einer besonders bevorzugten verfahrenstechnischen Ausführung der Erfindung ist vorgesehen, dass der Inliner nach Einsetzen und Verschweißen an den starren Einfüll- und Entnahmestutzen des Kunststoff-Innenbehälters mit Druckluft aufgeblasen und durch Vakuum-Pumpen überschüssige Luft aus dem Zwischenraum zwischen äußerer Oberfläche des Inliners und innerer Oberfläche des Kunststoff-Innenbehälters restlos entfernt wird, bis keine Luft und kein Zwischenraum mehr zwischen Inliner und Kunststoff-Innenbehälter vorhanden ist, so dass ein stabiles Vakuum eingestellt ist, das nach gasdichtem Verschließen der Behälteröffnung, durch die die überschüssige Luft abgepumpt wurde, während des gesamten bestimmungsmäßigen Gebrauchs des Palettencontainers bis zum nächsten Auswechseln des gebrauchten Inliners dauerhaft bestehen bleibt. Diese außergewöhnliche Handhabungsfreundlichkeit der erfindungsgemäßen Palettencontainer wird dadurch erreicht, dass der flexible Inliner mit seinem oberen Einfüllstutzen stoffschlüssig am oberen Einfüllstutzen des starren Kunststoff-Innenbehälters und mit seinem unteren dünnwandigen Entnahmestutzen stoffschlüssig am unteren Entnahmestutzen des starren Kunststoff-Innenbehälters jeweils gas- und flüssigkeitsdicht angeschweißt ist, während die gesamte äußere Oberfläche des eingesetzten Inliners mit der gesamten inneren Oberfläche des Kunststoff-Innenbehälters in Wirkkontakt steht und kraftschlüssig mit dieser verbunden ist. Dadurch wird mit allerhöchster Sicherheit ausgeschlossen, dass sich immer noch Falten vor dem unteren Entnahmestutzen im Inliner bilden können. Der Inliner sitzt im Kunststoff-Innenbehälter sozusagen wie eine zweite Haut. Um das Vakuumpumpen zu ermöglichen, kann an beliebiger passender Stelle im Oberboden eine zusätzliche Behälteröffnung angeordnet sein. Vorzugsweise ist die Behälteröffnung als 2-Zoll-Spundöffnung ausgeführt, die mit einem 2-Zoll-Spundstopfen - vorzugsweise mit eingebautem Einwegeventil - gas- und flüssigkeitsdicht verschließbar ist. An die Behälteröffnung wird bei Bedarf eine Vakuum/ Druckluft-Pumpe angeschlossen.

Die Erfindung wird nachfolgend anhand eines in den Zeichnungen schematisch dargestellten Ausführungsbeispiels näher erläutert und beschrieben.

Es zeigen:
- Figur 1: in Frontansicht einen IBC mit eingesetztem erfindungsgemäßen Inliner,
- Figur 2: in perspektivischer Ansicht den eingesetzten erfindungsgemäßen Inliner,
- Figur 3: eine Draufsicht auf ein Oberboden-Zuschnittsteil des Inliners,
- Figur 4: eine Draufsicht auf ein vertikales Wandungs-Zuschnittsteil des Inliners,
- Figur 5: eine Draufsicht auf ein Unterboden-Zuschnittsteil des Inliners und
- Figur 6: eine perspektivische Teilschnitt-Ansicht um den Bereich der oberen Einfüllöffnung des Kunststoff-Innenbehälters und
- Figur 7: eine perspektivische Teilschnitt-Ansicht um den Bereich der unteren Entnahmeöffnung des Kunststoff-Innenbehälters

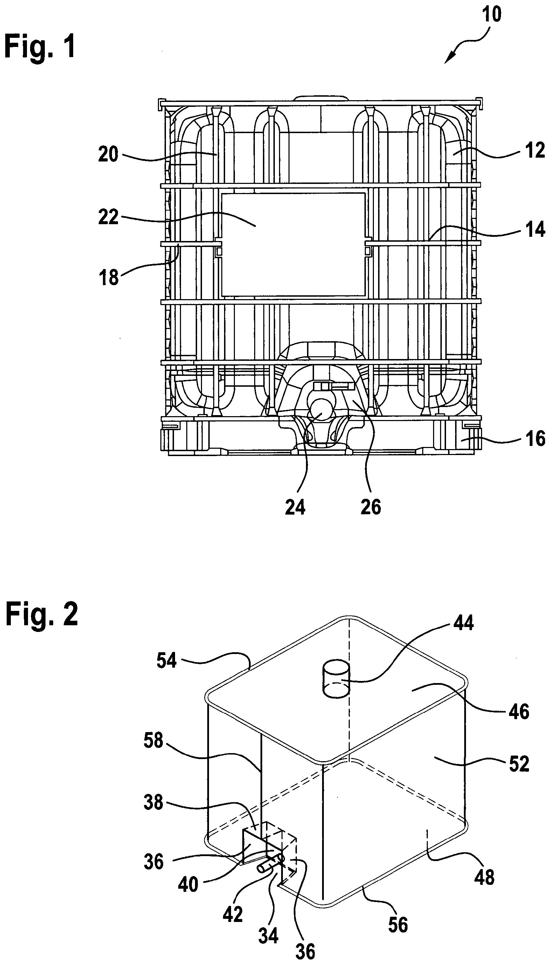

In Figur 1 ist mit der Bezugsziffer 10 ein Palettencontainer (= IBC) zur Lagerung und zum Transport von insbesondere gefährlichen flüssigen oder fließfähigen Füllgütern bezeichnet. Für einen Einsatz bzw. für eine Verwendung von gefährlichen Füllgütern erfüllt der Palettencontainer 10 besondere Prüfkriterien und ist mit einer entsprechenden amtlichen Zulassung versehen. In einer Ausführung für ein Füllgutvolumen von ca. 1000 I weist der Palettencontainer 10 standardisierte Abmessungen mit einer Länge von ca. 1200 mm, einer Breite von ca. 1000 mm und einer Höhe von ca. 1151 mm auf. Die Hauptelemente des Palettencontainers 10 bestehen aus einem im Blasformverfahren aus thermoplastischem Kunststoff hergestellten, dünnwandigen starren Innenbehälter 12, einem den Kunststoff-Innenbehälter 12 als Stützmantel dicht umschließenden Rohr-Gitterrahmen 14 und einer Bodenpalette 16, auf welcher der Kunststoff-Innenbehälter 12 aufliegt und mit welcher der Rohr-Gitterrahmen 14 fest verbunden ist. Der äußere Rohr-Gitterrahmen 14 besteht aus miteinander verschweißten horizontalen und vertikalen Rohrstäben 18, 20. Um einen geschlossenen Gitterkäfig als Außenbehälter zu erhalten, sind die ringförmig umlaufenden horizontalen Rohrstäbe 18 jeweils an einer Verbindungsstelle fest miteinander verbunden. Die Bodenpalette 16 ist in der dargestellten Version als Composite-Palette mit oberer Stahlblech-Tragplatte, mit darunter angeordnetem Stahlrohr-Tragrahmen und mit Kunststoff-Eck- und Mittelfüßen ausgebildet. Auf der Frontseite des Rohr-Gitterrahmens 14 ist eine Beschriftungstafel 22 aus dünnem Stahlblech zur Kennzeichnung des jeweiligen flüssigen Füllguts befestigt. In der Mitte des Bodens des Kunststoff-Innenbehälters 12 ist zur Entnahme des flüssigen Füllguts eine Entnahmearmatur 24 angeschlossen.

Entsprechend den Abmessungen des Palettencontainers 10 weist der Kunststoff-Innenbehälter 12 zwei längere Seitenwandungen, eine kürzere Rückwandung, eine kürzere Vorderwandung, einen Oberboden mit verschließbarem Einfüllstutzen 30 und einen Behälterboden auf, wobei bodenseitig in der Mitte der Vorderwandung ein unterer Entnahmebereich mit einer nach innen in den Kunststoff-Innenbehälter 12 hinein gerichteten, schutzgehäuseförmigen Einformung 26 zur geschützten zurückversetzten Anordnung der verschließbaren Entnahmearmatur 24 vorgesehen ist. Um den starren Kunststoff-Innenbehälter 12 vor einer Verunreinigung durch das eingefüllte Füllgut zu schützen und eine mehrfache Weiterverwendung des wertvollen Innenbehälters zu ermöglichen, wird jeweils vor einer neuen Befüllung des Palettencontainers 10 ein dünnwandiger, gleichfalls kubusförmiger flexibler Inliner 28 oder gemäß früherer Bezeichnung ein Foliensack in den starren Kunststoff-Innenbehälter 12 eingesetzt, der oben an den Einfüllstutzen 30 und unten an den Entnahmestutzen 32 des starren Kunststoff-Innenbehälters 12 angeschlossen wird.

Dieser kubusförmige flexible Inliner 28 gemäß der vorliegenden Erfindung ist in Figur 2 schematisch für sich (ohne den umschließenden Kunststoff-Innenbehälter 12) dargestellt. Im Gegensatz zum starren Kunststoff-Innenbehälter 12, der bei seiner Handhabung auf jeden Fall immer formstabil bleibt, ist der Inliner 28 aufgrund seiner Dünnwandigkeit nicht selbst formstabil sondern sehr flexibel, nachgiebig und anpassungsfähig. Die Wanddicke der üblicherweise mehrschichtigen Inliner-Verbundfolie beträgt ca. 100 - 150 µm mit einem Flächengewicht ca. 100-150g/m²; das ergibt für einen 1000 I Inliner-Sack ein Materialgewicht von ca. 0,7 - 1,3 kg. Die eingesetzten Inliner sind in aller Regel aus mehrschichtiger Kunststoff-Verbundfolie hergestellt. Dabei können die hauchdünnen Verbundschichten aus verschiedenen Materialien wie z. B. HDPE oder LDPE / EVOH / PET / PA / Haftvermittler / SiOx bestehen und/oder mit einer Glasfaser- oder Gewebeverstärkung versehen sein. Je nach Anwendungsfall ist die Verbundfolie mit Barriereschichten gegen Kohlenwasserstoff-, Sauerstoff- oder Wasserdampf-Diffusion oder mit einer aseptischen bakterientötenden Beschichtung oder einer aufgedampften silberhaltigen oder aluminiumhaltigen Metallfolie ausgestattet.

Gemäß der vorliegenden Erfindung zeichnet sich der kubusförmige flexible Inliner 28 dadurch aus, dass er im vorderen unteren Entnahmebereich eine nach innen gerichtete, der schutzgehäuseförmigen Einformung 26 des starren Kunststoff-Innenbehälters 12 entsprechende, anpassbare Wandungs-Einbuchtung 34 mit zwei seitlichen Wandungsteilen 36, einem oberen Wandungsteil 38 und einem rückwärtigen Wandungsteil 40 mit daran angeformtem flexiblen Entnahmestutzen 42 aufweist, die es ermöglichen, die zur vollständig passgenauen Anlage an die innere Oberfläche des schutzgehäuseförmig ins Innere des starren Kunststoff-Innenbehälters 12 ragende Einformung 26 angepasste Wandungs-Einbuchtung auszubilden. Diese Wandungs-Einbuchtung 34 des Inliners 28 ist hier der besseren Übersichtlichkeit halber sehr kastenförmig dargestellt. Die Wandungen und Wandungsübergänge können natürlich auch stark gerundet, abgeflacht und/oder ineinander übergehend, aber auf jeden Fall der jeweiligen schutzgehäuseförmigen Einformung 26 des starren Kunststoff-Innenbehälters 12 angepasst ausgebildet sein.

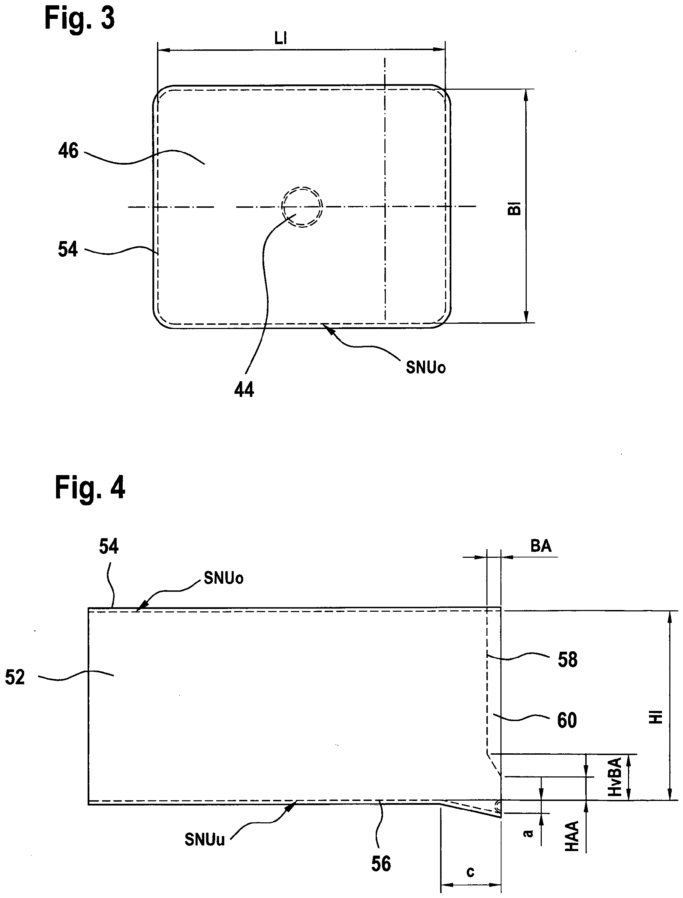

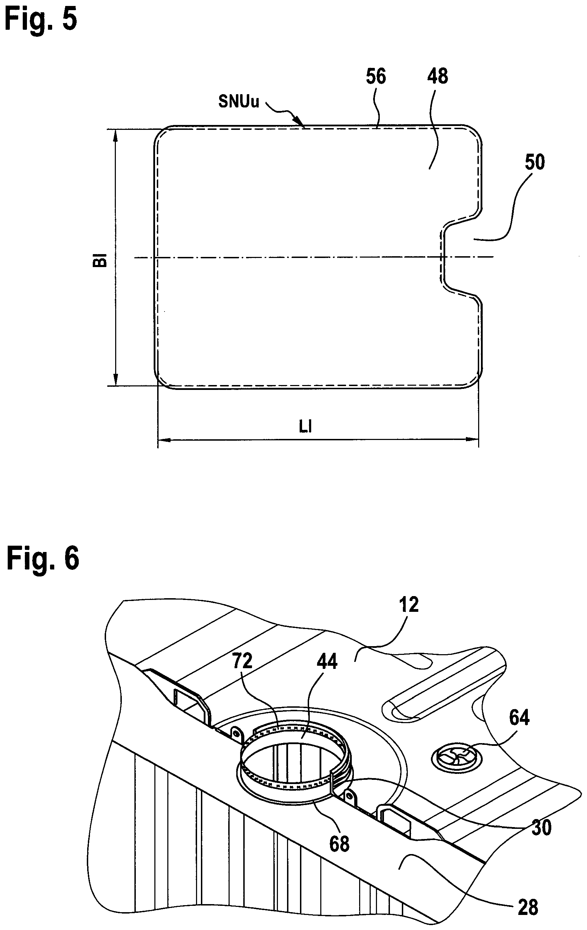

Der flexible Inliner 28 weist für einen üblichen 1000-I-Palettencontainer eine kubusförmige Gestalt mit einer Länge LI von ca. 1150 - 1190 mm, einer Breite BI von ca. 950 - 990 mm und einer Höhe HI von ca. 950 - 1050 mm auf. Die Längenmaße sollten auf eine Plus/ Minus-Toleranz (+/-) von 2 mm genau eingehalten sein. Fertigungstechnisch ist der kubusförmige flexible Inliner 28 aus drei Zuschnittsteilen zusammengeschweißt. Diese drei Zuschnittsteile bestehen aus einem oberen horizontalen Deckelteil 46 mit dem zentralmittigen flexiblen Einfüllstutzen 44 - wie es in Figur 3 ersichtlich ist - einem unteren horizontalen Bodenteil 48 mit einer der Bodenform der Wandungs-Einbuchtung 34 entsprechenden Aussparung 50 - wie es in Figur 5 ersichtlich ist - und einem vertikal umlaufenden Seitenwandungs-Zuschnittsteil 52 mit Flächenanteilen für die zwei seitlichen Wandungsteile 36, sowie das obere 38 und das rückwärtige Wandungsteil 40 der Wandungs-Einbuchtung 34 des Inliners 28 - wie es in Figur 4 dargestellt ist. Die drei Zuschnittsteile sind mit zwei an der Außenkante des oberen Deckelteils 46 und an der Außenkante des unteren Bodenteils 48 horizontal umlaufenden Schweißnähten 54, 56 und zum Verschließen des Seitenwandungs-Zuschnittsteils 52 mit einer in der Mitte der Vorderwandung und durch die Mitte der Wandungs-Einbuchtung 34 vertikal von oben nach unten verlaufenden Schweißnaht 58 zusammengeschweißt.

Nach Fertigstellung des Inliners 28 aus den drei Zuschnittsteilen beträgt für einen Inliner für ein Füllgutvolumen von ca. 1000 I die Länge der oberen horizontalen Schweißnaht 54, d. h. der obere Schweißnahtumfang SNUo ca. 4100 - 4150 mm, die Länge der unteren horizontalen Schweißnaht 56, d. h. der untere Schweißnahtumfang SNUu ca. 4265 - 4310 mm und die vorderseitige vertikale Schweißnaht 58 ca. 1050 - 1100 mm.

Das in Figur 4 dargestellte Seitenwandungs-Zuschnittsteil 52 ist doppelt gelegt und hat unten zwei Dreiecks-Zipfel von c = 320 mm x a = 70 mm; oberhalb der Einbuchtung 34 wird ein doppelter Streifen von 70 x 875 mm "abgeschweißt". Der Ansatz der Abschweißung befindet sich auf einer Höhe HAA von 125,5 mm ab der unteren Schweißnaht. Die Abschweißung verläuft ab da zunächst schräg im spitzen Winkel ansteigend, bis sie auf einer Höhe HvBA von 250 mm ab der unteren Schweißnaht die volle Breite von 70 mm erreicht. Diese Abschweißung 60 wird entfernt und stellt lediglich Verschnitt dar. Dies ist aber notwendig, um die gewölbte Kontur der Einformung 26 im blasgeformten Kunststoff-Innenbehälter 12 nachzuempfinden. Es kann aber auch ein Folienschlauch mit einer konstanten Höhe von 1070 mm plus 2 x Schweißnahtrand verwendet werden. Das ergäbe bei etwa gleichem Materialverbrauch durch Abschweißung eine einfachere Zuschnittsgeometrie. Nachdem die Abschweißung 60 im vertikalen Wandungs-Zuschnitt 52 bzw. im Folienschlauch mit Ausbildung der gewölbten Inliner-Wandungs-Einbuchtung 34 erfolgt ist, wird der flexible Entnahmestutzen 42 über einen kleineren Schweiß-Flanschring 66 auf das rückwärtige Wandungsteil 40 fest aufgeschweißt und eine entsprechende Durchgangsöffnung ausgeschnitten. Ebenso wird der obere flexible Einfüllstutzen 44 über einen im Durchmesser größeren Schweiß-Flanschring 68 zentralmittig auf das obere horizontale Deckelteil 46 fest aufgeschweißt und eine entsprechende größere Durchgangsöffnung ausgeschnitten. Danach wird dann das Seitenwandungs- Zuschnittsteil 52 inklusive des flexiblen Entnahmestutzens 42 über die obere Schweißnaht 54 mit dem Deckelteil 46 inklusive des flexiblen Einfüllstutzens 44 und über die untere Schweißnaht 56 das Bodenteil 48 im letzten Arbeitsschritt zum fertigen Inliner verschweißt.

Vor dem Einsetzen des Inliners 28 in den starren Kunststoff-Innenbehälter 12 soll der obere Einfüllstutzen 44 des flexiblen Inliners einem Durchmesser von ca. 145 mm oder 225 mm und eine Länge von ca. 300 mm sowie der untere flexible Entnahmestutzen 44 einen Durchmesser von ca. 2", 3" oder 145 mm und eine Länge von wenigstens 100 mm aufweisen. Nach dem Einsetzen des Inliners 28 in den starren Kunststoff-Innenbehälter 12 werden der Einfüll- und der Entnahmestutzen (44, 42) des flexiblen Inliners 28 jeweils um den Einfüll- und den Entnahmestutzen (30, 32) des starren Kunststoff-Innenbehälters 12 umgeschlagen und übergestülpt, zug- und spannungsfrei angeschweißt und dann auf die passende Länge zugeschnitten.

In Figur 6 ist in Teilschnittdarstellung der Einfüllbereich des Kunststoff-Innenbehälters 12 mit angeformtem Einfüllstutzen 30 und daran angeschweißtem Einfüllstutzen 44 des flexiblen Inliners 28 ersichtlich. Der flexible Einfüllstutzen 44 ist einerseits über einen schmalen Flanschrand 68 auf der Oberseite des Inliners 28 und außenseitig nach oben strammgezogen, gemäß einer nicht ersichtlichen "Kreis"-Markierung in die richtige Positionierung ausgerichtet, danach über den starren Einfüllstutzen 30 umgestülpt und über eine größere Ringschweißnaht 72 verdrehsicher innenseitig kurz unterhalb der Stirnseite des starren Einfüllstutzens 30 gas- und flüssigkeitsdicht angeschweißt, wonach das überschüssige Schlauchstück des flexiblen Inliner-Einfüllstutzens 44 bündig abgeschnitten ist. Um beim Aufblasen des Inliners überschüssige Luft aus dem Zwischenraum zwischen Inliner 28 und Kunststoff-Innenbehälter 12 entweichen zu lassen und/oder das Vakuumpumpen aus diesem Zwischenraum zu ermöglichen, ist an beliebiger passender Stelle im Oberboden eine zusätzliche Behälteröffnung 64 angeordnet. Vorzugsweise ist die Behälteröffnung 64 als 2-Zoll-Spundöffnung ausgeführt, die mit einem 2-Zoll-Spundstopfen - vorzugsweise mit eingebautem Einwegeventil - gas- und flüssigkeitsdicht verschließbar ist. An die Behälteröffnung 64 wird bei Bedarf eine Vakuum/Druckluft-Pumpe angeschlossen.

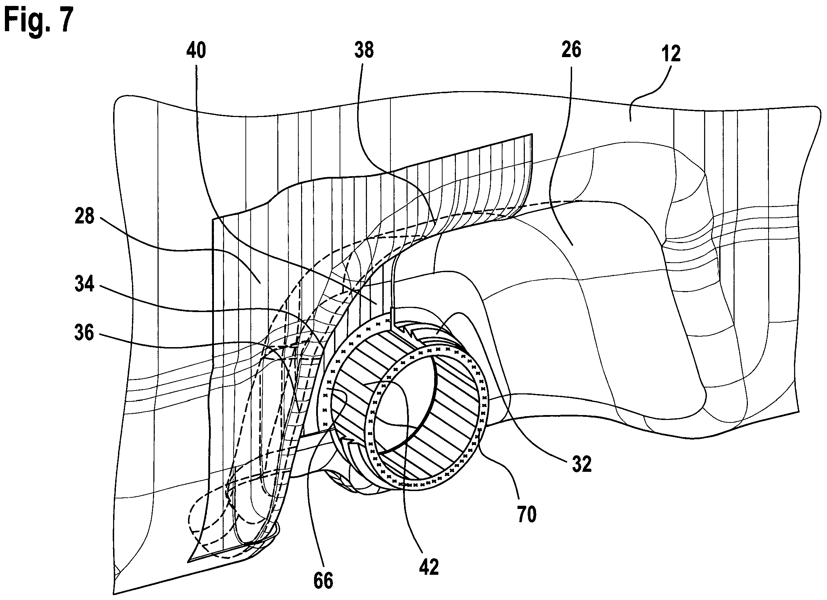

Schließlich ist in Figur 7 in Teilschnittdarstellung der Entnahmebereich des Kunststoff-Innenbehälters 12 mit angeformtem starren Entnahmestutzen 32 und daran stirnseitig angeschweißtem Entnahmestutzen 42 des flexiblen Inliners 28 ersichtlich.

Hier ist zum besseren Verständnis ein Viereck aus der Wandung des starren Kunststoff-Innenbehälters herausgeschnitten, wobei die Schnittlinie durch den Entnahmestutzen 32, durch das eingeformte Schutzgehäuse 26 und ein kleines Stück der Vorderwandung des Kunststoff-Innenbehälters 12 verläuft, so dass in dem ausgeschnittenen Viereck der anliegende Inliner 28 mit gewölbter Wandungseinbuchtung 34 - durch eine Vielzahl von vertikalen Linien gekennzeichnet - ersichtlich ist. Mit gestrichelten Linien" ist weiterhin noch der verdeckte linke hintere Teil der Wandungseinbuchtung 34 angedeutet.

In dem Viereck-Ausschnitt ist deutlich erkennbar, dass der flexible Entnahmestutzen 42 innen bzw. rückseitig über einen schmalen Schweiß-Flanschrand 66 auf dem rückwärtigen Wandungsteil 40 der Wandungs-Einbuchtung 34 des Inliners 28 und außenseitig über eine kleinere Stirn-Schweißnaht 70 auf der Stirnfläche des starren Entnahmestutzens 32 gas- und flüssigkeitsdicht aufgeschweißt ist. Wichtig hierbei ist - wie in Fig. 7 zu erkennen -, dass der Inliner 28 mit seiner formangepassten Wandungs-Einbuchtung 34 vollflächig wie eine zweite Haut auf der inneren Oberfläche der Einformung 26 des starren Innenbehälters 12 aufliegt, so dass dazwischen keinerlei Zwischenräume bzw. Hohlräume verbleiben können, wie es bisher bei bekannten IBCs mit üblichen Inlinern der Fall war.

Ein wesentlicher Vorteil des Zweite-Haut-Inliners besteht darin, dass der Foliensack keine hohe Reißfestigkeit gegen Flattern beim Befüllen oder Hin- und Herschwappen des flüssigen Füllguts bei Transportbewegungen benötigt, da hier keinerlei Bewegung des Inliner-Folienmaterials erfolgt, weil dieses fest und dauerhaft auf der Innenseite des Kunststoff-Innenbehälters 12 anliegt, sozusagen wie angeklebt. Dadurch können nun auch rissempfindliche Folienmaterialien mit hohen Barriereeigenschaften verwendet werden.

Zweckmäßigerweise ist der obere flexible Einfüllstutzen 44 sowie der untere flexible Entnahmestutzen 42 des flexiblen Inliners 28 aus dem gleichen Folienmaterial mit den gleichen Barriereeigenschaften wie das Folienmaterial des flexiblen Inliners 28 hergestellt. Bekannte Inliner sind oftmals mit im Spritzgussverfahren aus thermoplastischem Kunststoff wie LDPE vorgefertigten Einfüllstutzen und Entnahmestutzen mit angespritztem Flanschrand zum Verschweißen mit dem mehrschichtigen Verbund-Folienmaterial des Inliners versehen. Diese Einfüllstutzen und Entnahmestutzen sind zumeist auch etwas dicker und steifer ausgebildet. Sie weisen allerdings selbst keine Barriereeigenschaften auf. Derartige Inliner mit im Spritzgussverfahren hergestellten Einfüll-/Entnahmestutzen sind für sauerstoffempfindliche Flüssigkeiten wie z. B. Duftstoffe für die Parfümherstellung oder Zusatzstoffe für die Lebensmittelherstellung nicht geeignet. Bei dem erfindungsgemäßen Inliner 28 sind die Einfüll-/Entnahmestutzen (42, 44) dagegen mit den gleichen Barriereeigenschaften wie der Inliner 28 selbst ausgestattet und nachteilige kunststoffmaterialdurchdringende Diffusionsvorgänge sind ausgeschlossen.

### Fazit:

Bei Verwendung eines erfindungsgemäßen Inliners braucht zur Rekonditionierung nach Gebrauch nur noch der verunreinigte Inliner entsorgt zu werden, der je nach Foliendicke für einen 1000 Liter IBC lediglich ein Gewicht von ca. 0,7 bis 1,3 kg an Kunststoffmasse ohne Füllgutverunreinigungen aufweist, und ein neuer Inliner für eine Weiterbenutzung des IBC eingesetzt zu werden. Beim Austausch des starren Innenbehälters mit einem Gewicht von ca. 14 kg würden etwa EUR 35,- an Herstellungskosten anfallen, während der Austausch eines Inliners mit Kosten von ca. EUR 15,- zu Buche schlägt. Die vorliegende Erfindung bietet somit eine einwandfrei funktionierende, preiswerte und materialschonende Lösung für die Wiederverwendung von gebrauchten IBCs an.

**Bezugsziffernliste**

| | | | |
|---|---|---|---|
| **10** | Palettencontainer | **62** | frei |
| **12** | Kunststoff-Innenbehälter | **64** | obere 2"-Behälteröffnung Vakuum |
| **14** | Rohr-Gitterrahmen | **66** | Schweiß-Flanschring (42, 40) klein |
| **16** | Bodenpalette | **68** | Schweiß-Flanschring (44, 28) groß |
| **18** | horizontale Rohrstäbe (12) | **70** | Stirn-Schweißnaht (24, 42) klein |
| **20** | vertikale Rohrstäbe (12) | **72** | Ring-Schweißnaht (30, 44) groß |
| **22** | Beschriftungstafel | **LI** | Länge Inliner (28) |
| **24** | Entnahmearmatur | **BI** | Breite Inliner (28) |
| **26** | Einformung (12) | **SNUo** | Schweißnahtumfang oben |
| **28** | Inliner (Foliensack) | **SNUu** | Schweißnahtumfang unten |
| **30** | Einfüllstutzen (12) starr | **c** | Langseite Dreieckszipfel |
| **32** | Entnahmestutzen starr (12) | **a** | Kurzseite Dreieckszipfel |
| **34** | Inliner-Einbuchtung (28) | **BA** | Breite Abschweißung (60) |
| **36** | seitliche Wandungsteile (34, 28) | **HAA** | Höhe Ansatz Abschweißung (60) |
| **38** | oberes Wandungsteil (34, 28) | **HvBA** | Höhe volle Breite Abschweißung (60) |
| **40** | rückwärtiges Wandungsteil (34, 28) | | |
| **42** | flexibler Entnahmestutzen (28) | | |
| **44** | flexibler Einfüllstutzen (28) | | |
| **46** | oberes horizontales Deckelteil (28) | | |
| **48** | unteres horizontales Bodenteil (28) | | |
| **50** | Aussparung (28, 34) | | |
| **52** | Seitenwandungs-Zuschnittsteil (28) | | |
| **54** | obere horizontale Schweißnaht (46, 52) | | |
| **56** | untere horizontale Schweißnaht (48, 52) | | |
| **58** | vordere vertikale Schweißnaht (52) | | |
| **60** | Abschweißung (52) | | |

## Patentansprüche

1. Kubusförmiger flexibler Inliner (28) aus Kunststoff-Folie mit oberem Einfüllstutzen (44) und unterem Entnahmestutzen (42) für einen Palettencontainer (10) zur Lagerung und zum Transport von flüssigen oder fließfähigen Füllgütern, mit einem dünnwandigen starren Innenbehälter (12) aus thermoplastischem Kunststoff, mit einem den Kunststoff-Innenbehälter (12) als Stützmantel dicht umschließenden Rohr-Gitterrahmen (14) aus miteinander verschweißten horizontalen und vertikalen Rohrstäben (18, 20), und mit einer rechteckigen Bodenpalette (16), auf welcher der Kunststoff-Innenbehälter (12) aufliegt und mit welcher der Rohr-Gitterrahmen (14) fest verbunden ist, wobei der kubusförmige Kunststoff-Innenbehälter (12) zwei längere Seitenwandungen, eine kürzere Rückwandung, eine kürzere Vorderwandung, einen Oberboden mit verschließbarem Einfüllstutzen (30) und einen Behälterboden aufweist, wobei bodenseitig in der Mitte der Vorderwandung ein unterer Entnahmebereich mit einer nach innen in den Kunststoff-Innenbehälter (12) hinein gerichteten, schutzgehäuseförmigen Einformung (26) zur geschützten zurückversetzten Anordnung einer verschließbaren Entnahmearmatur (24) vorgesehen ist,
**dadurch gekennzeichnet, dass**
der kubusförmige flexible Inliner (28) im unteren Entnahmebereich eine nach innen gerichtete, an die schutzgehäuseförmige Einformung (26) des starren Kunststoff-Innenbehälters (12) entsprechend anpassbare Wandungs-Einbuchtung (34) mit zwei seitlichen Wandungsteilen (36), einem oberen Wandungsteil (38) und einem rückwärtigen Wandungsteil (40) mit daran angeformtem flexiblen Entnahmestutzen (42) aufweist, die es ermöglichen, die zur vollständig passgenauen Anlage an die innere Oberfläche der schutzgehäuseförmig ins Innere des starren Kunststoff-Innenbehälters (12) ragenden Einformung (26) angepasste Wandungs-Einbuchtung (34) auszubilden.

2. Inliner nach Anspruch 1,
**dadurch gekennzeichnet, dass**
der kubusförmige flexible Inliner (28) aus drei Zuschnittsteilen zusammengeschweißt ist und ein oberes horizontales Deckelteil (46) mit einem zentralmittigen flexiblen Einfüllstutzen (44), ein unteres horizontales Bodenteil (48) mit einer der Bodenform der Wandungs-Einbuchtung (34) entsprechenden Aussparung (50) und ein vertikal umlaufendes Seitenwandungs-Zuschnittsteil (52) mit Flächenanteilen für die zwei seitlichen Wandungsteile (36), das obere (38) und das rückwärtige Wandungsteil (40) der Wandungs-Einbuchtung (34) des Inliners (28) umfasst.

3. Inliner nach Anspruch 1 oder 2,
**dadurch gekennzeichnet, dass**
die drei Zuschnittsteile mit jeweils einer an der Außenkante des oberen Deckelteils (46) und an der Außenkante des unteren Bodenteils (48) horizontal umlaufenden oberen und unteren Schweißnaht (54, 56) und zum Verschließen des Seitenwandungs-Zuschnittsteils (52) mit einer in der Mitte der Vorderwandung und durch die Mitte der Wandungs-Einbuchtung (34) vertikal von oben nach unten verlaufenden Schweißnaht (58) zusammengeschweißt sind.

4. Inliner nach Anspruch 1 oder 2,
**dadurch gekennzeichnet, dass**
die drei Zuschnittsteile mit jeweils einer an der Außenkante des oberen Deckelteils (46) und an der Außenkante des unteren Bodenteils (48) horizontal umlaufenden oberen und unteren Schweißnaht (54, 56) und zum Verschließen des Seitenwandungs-Zuschnittsteils (52) mit einer in der Mitte der Rückwandung vertikal von oben nach unten verlaufenden Schweißnaht zusammengeschweißt sind, wobei in der Mitte der Vorderwandung eine vertikal von oben nach unten bis auf die Wandungs-Einbuchtung (34) verlaufende Abschweißung (60) vorgesehen ist.

5. Inliner nach Anspruch 1, 2, 3 oder 4,
**dadurch gekennzeichnet, dass**
die Länge der oberen horizontalen Schweißnaht (54) kürzer als die Länge der unteren horizontalen Schweißnaht (56) ist, bzw. der obere Schweißnahtumfang des oberen Deckelteils (46) kürzer als der untere Schweißnahtumfang des unteren Bodenteils (48) ist und die vorderseitige vertikale Schweißnaht (58) des Seitenwandungs-Zuschnittsteils (52) länger als die Höhe des Inliner-Kubus ist.

6. Inliner nach Anspruch 1, 2, 3, 4 oder 5,
**dadurch gekennzeichnet, dass**
bei einem Inliner (28) mit 1000 l Füllgutvolumen die Länge der oberen horizontalen Schweißnaht (54), d. h. der obere Schweißnahtumfang (SNUo) 4100 - 4150 mm, die Länge der unteren horizontalen Schweißnaht (56), d. h. der untere Schweißnahtumfang (SNUu) ca. 4265 - 4310 mm und die vorderseitige vertikale Schweißnaht (58) ca. 800 - 1100 mm lang ausgebildet sind.

7. Inliner nach einem der vorhergehenden Ansprüche 1 bis 6,
**dadurch gekennzeichnet, dass**
der flexible Inliner (28) für ein Füllgutvolumen von ca. 1000 l eine kubusförmige Gestalt mit einer Länge (LI) von 1150 - 1190 mm, einer Breite (BI) von 950 - 1050 mm und einer Höhe (HI) von 950 - 1050 mm aufweist und seine Wandung aus drei Zuschnittsteilen zusammengeschweißt ist.

8. Inliner nach einem der vorhergehenden Ansprüche 1 bis 7,
**dadurch gekennzeichnet, dass**
der flexible Inliner (28) einen oberen Einfüllstutzen (44) mit einem Durchmesser von ca. 145 mm oder 225 mm und einer Länge von 290 - 310 mm sowie einen unteren flexiblen Entnahmestutzen (42) mit einem Durchmesser von ca. 2", 3" oder 145 mm und einer Länge von wenigstens 100 mm aufweist.

9. Inliner nach einem der vorhergehenden Ansprüche 1 bis 10,
**dadurch gekennzeichnet, dass** der flexible Inliner (28) mit seinem oberen Einfüllstutzen (44) stoffschlüssig am oberen Einfüllstutzen (30) des starren Kunststoff-Innenbehälters (12) und mit seinem unteren flexiblen Entnahmestutzen (42) stoffschlüssig am unteren Entnahmestutzen (32) des starren Kunststoff-Innenbehälters (12) jeweils gas- und flüssigkeitsdicht angeschweißt ist, während die gesamte äußere Oberfläche des eingesetzten Inliners (28) mit der gesamten inneren Oberfläche des Kunststoff-Innenbehälters (12) in Wirkkontakt steht und kraftschlüssig mit dieser verbunden ist.

10. Inliner nach einem der vorhergehenden Ansprüche 1 bis 9,
**dadurch gekennzeichnet, dass**
der obere flexible Einfüllstutzen (44) und der untere flexible Entnahmestutzen (42) des flexiblen Inliners (28) als Schlauchfolie aus dem gleichen mehrschichtigen Verbund-Folienmaterial mit den gleichen Barriereeigenschaften wie das mehrschichtige Verbund-Folienmaterial des flexiblen Inliners (28) hergestellt ist.

11. Palettencontainer (10) zur Lagerung und zum Transport von flüssigen oder fließfähigen Füllgütern mit einem dünnwandigen starren Innenbehälter (12) aus thermoplastischem Kunststoff, mit einem den Kunststoff-Innenbehälter (12) als Stützmantel dicht umschließenden Rohr-Gitterrahmen (14) aus miteinander verschweißten horizontalen und vertikalen Rohrstäben (18, 20), und mit einer rechteckigen Bodenpalette (16), auf welcher der Kunststoff-Innenbehälter (12) aufliegt und mit welcher der Rohr-Gitterrahmen (14) fest verbunden ist, wobei der kubusförmige Kunststoff-Innenbehälter (12) zwei längere Seitenwandungen, eine kürzere Rückwandung, eine kürzere Vorderwandung, einen Oberboden mit verschließbarem Einfüllstutzen (30) und einen Behälterboden aufweist, wobei bodenseitig in der Mitte der Vorderwandung ein unterer Entnahmebereich mit einer nach innen in den Kunststoff-Innenbehälter (12) hinein gerichteten, schutzgehäuseförmigen Einformung (26) zur geschützten zurückversetzten Anordnung einer verschließbaren Entnahmearmatur (24) vorgesehen ist, und wobei ein kubusförmiger flexibler Inliner (28) aus Kunststoff-Folie mit oberem Einfüllstutzen (44) und unterem Entnahmestutzen (42) nach einem der vorhergehenden Ansprüche 1 bis 12 in den starren Innenbehälter (12) eingesetzt ist,
**dadurch gekennzeichnet, dass**
der kubusförmige flexible Inliner (28) im unteren Entnahmebereich eine nach innen gerichtete, an die schutzgehäuseförmige Einformung (26) des starren Kunststoff-Innenbehälters (12) entsprechend angepasste Wandungs-Einbuchtung (34) mit zwei seitlichen Wandungsteilen (36), einem oberen Wandungsteil (38) und einem rückwärtigen Wandungsteil (40) mit daran angeformtem flexiblen Entnahmestutzen (42) aufweist, die zur vollständig passgenauen Anlage an die innere Oberfläche der schutzgehäuseförmig ins Innere des starren Kunststoff-Innenbehälters (12) ragenden Einformung (26) ausgebildet ist.

12. Verfahren zum Einsetzen eines neuen Inliners (28) nach einem der vorhergehenden Ansprüche 1 bis 10 in einen Palettencontainer nach Anspruch 11,
**dadurch gekennzeichnet, dass** der Inliner (28) nach Einsetzen und Verschweißen an den starren Einfüll- und Entnahmestutzen (30, 32) des Kunststoff-Innenbehälters (12) mit Druckluft aufgeblasen und durch Vakuum-Pumpen überschüssige Luft aus dem Zwischenraum zwischen äußerer Oberfläche des Inliners (28) und innerer Oberfläche des Kunststoff-Innenbehälters (12) restlos entfernt wird, bis keine Luft und kein Zwischenraum mehr zwischen Inliner (28) und Kunststoff-Innenbehälter (12) vorhanden ist, so dass ein stabiles Vakuum eingestellt ist, das nach gasdichtem Verschließen der Behälteröffnung, durch die die überschüssige Luft abgepumpt wurde, während des gesamten bestimmungsmäßigen Gebrauchs des Palettencontainers (10) bis zum nächsten Auswechseln des gebrauchten Inliners (28) dauerhaft bestehen bleibt.

## Claims

1. Cuboid-shaped flexible inliner (28) from a plastics film, having an upper filling connector (44) and a lower retrieval connector (42), for a pallet container (10) for storing and for transporting liquid or free-flowing filling materials, having a thin-walled rigid internal container (12) from a thermoplastic plastics material, having a tubular lattice frame (14), as a supporting jacket tightly enclosing the plastics-material internal container (12), from welded-together horizontal and vertical tubular bars (18, 20), and having a rectangular base pallet (16) on which the plastics-material internal container (12) bears and to which the tubular lattice frame (14) is fixedly connected, wherein the cuboid plastics-material internal container (12) has two longer side walls, a shorter rear wall, a shorter front wall, an upper base having a closable filling connector (30) and a container base, wherein on the base side, in the center of the front wall, a lower retrieval region having a protective-housing-shaped molding (26), directed inward toward the inside of the plastics-material internal container (12), for disposing a closable retrieval fitting (24) in a protected recessed manner is provided,
**characterized in that**
the cuboid-shaped flexible inliner (28) in the lower retrieval region has a wall recess (34), directed inward and adaptable so as to correspond with the protective-housing-shaped molding (26) of the rigid plastics-material internal container (12), having two lateral wall parts (36), an upper wall part (38), and a rearward wall part (40) having a flexible retrieval connector (42) molded thereon, which make it possible to form the wall recess (34) which is adapted so as to bear completely in an exact fit on the internal surface of the molding (26) that protrudes in a protective-housing manner into the interior of the rigid plastics-material internal container (12).

2. Inliner according to Claim 1,
**characterized in that**
the cuboid-shaped flexible inliner (28) is welded together from three blank panels, and comprises an upper horizontal lid part (46) having a centric flexible filling connector (44), a lower horizontal base part (48) having a clearance (50) that corresponds with the base shape of the wall recess (34), and a vertically encircling side-wall blank panel (52) having area portions for the two lateral wall parts (36), the upper wall part (38), and the rearward wall part (40) of the wall recess (34) of the inliner (28).

3. Inliner according to Claim 1 or 2,
**characterized in that**
the three blank panels in each case are welded together by way of an upper and a lower weld seam (54, 56) that horizontally encircles the external edge of the upper lid part (46) and the external edge of the lower base part (48), and for closing the side-wall blank panel (52) are welded together by way of a weld seam (58) that runs vertically from top to bottom in the center of the front wall and through the center of the wall recess (34).

4. Inliner according to Claim 1 or 2,
**characterized in that**
the three blank panels in each case are welded together by way of an upper and a lower weld seam (54, 56) that horizontally encircles the external edge of the upper lid part (46) and the external edge of the lower base part (48), and for closing the side-wall blank panel (52) are welded together by way of a weld seam that runs vertically from top to bottom in the center of the rear wall, wherein a weld waste (60) running vertically from top to bottom up to the wall recess (34) is provided in the center of the front wall.

5. Inliner according to Claim 1, 2, 3 or 4,
**characterized in that**
the length of the upper horizontal weld seam (54) is shorter than the length of the lower horizontal weld seam (56), or that the upper weld seam circumference of the upper lid part (46) is shorter than the lower weld seam circumference of the lower base part (48), and that the front-side vertical weld seam (58) of the side-wall blank panel (52) is longer than the height of the inliner cuboid.

6. Inliner according to Claim 1, 2, 3, 4 or 5,
**characterized in that**
in the case of an inliner (28) having a 1000 1 filling material volume, the length of the upper horizontal weld seam (54), that is to say the upper weld seam circumference (SNUo) is 4100 mm - 4150 mm, the length of the lower horizontal weld seam (56), that is to say the lower weld seam circumference (SNUu) is approx. 4265 - 4310 mm, and the front-side vertical weld seam (58) is approx. 800 - 1100 mm long.

7. Inliner according to one of preceding Claims 1 to 6,
**characterized in that**
the flexible inliner (28) for a filling material volume of approx. 1000 1 has a cuboid shape having a length (LI) of 1150 - 1190 mm, a width (BI) of 950 - 1050 mm, and a height (HI) of 950 - 1050 mm, and that the wall of said inliner is welded together from three blank panels.

8. Inliner according to one of preceding Claims 1 to 7,
**characterized in that**
the flexible inliner (28) has an upper filling connector (44) having a diameter of approx. 145 mm or 225 mm, and a length of 290 - 310 mm, and a lower flexible retrieval connector (42) having a diameter of approx. 2", 3", or 145 mm, and a length of at least 100 mm.

9. Inliner according to one of preceding Claims 1 to 8,
**characterized in that** the flexible inliner (28) by way of the upper filling connector (44) thereof is welded in a materially integral manner to the upper filling connector (30) of the rigid plastics-material internal container (12), and by way of the lower flexible retrieval connector (42) thereof is welded in a materially integral manner to the lower retrieval connector (32) of the rigid plastics-material internal container (12), in each case in a gas-tight and liquid-tight manner, while the entire external surface of the inserted inliner (28) is operatively connected to the entire internal surface of the plastics-material internal container (12) and is connected to the latter in a force-fitting manner.

10. Inliner according to one of preceding Claims 1 to 9,
**characterized in that**
the upper flexible filling connector (44) and the lower flexible retrieval connector (42) of the flexible inliner (28) are produced as a tubular film from the same multi-layered composite film material having the same barrier properties as the multi-layered composite film material of the flexible inliner (28).

11. Pallet container (10) for storing and for transporting liquid or free-flowing filling materials, having a thin-walled rigid internal container (12) from a thermoplastic plastics material, having a tubular lattice frame (14), as a supporting jacket tightly enclosing the plastics-material internal container (12), from welded-together horizontal and vertical tubular bars (18, 20), and having a rectangular base pallet (16) on which the plastics-material internal container (12) bears and to which the tubular lattice frame (14) is fixedly connected, wherein the cuboid plastics-material internal container (12) has two longer side walls, a shorter rear wall, a shorter front wall, an upper base having a closable filling connector (30) and a container base, wherein on the base side, in the center of the front wall, a lower retrieval region having a protective-housing-shaped molding (26), directed inward toward the inside of the plastics-material internal container (12), for disposing a closable retrieval fitting (24) in a protected recessed manner is provided, and wherein a cuboid-shaped flexible inliner (28) from a plastics film, having an upper filling connector (44) and a lower retrieval connector (42), according to one of preceding Claims 1 to 12 is inserted into the rigid internal container (12),
**characterized in that**
the cuboid-shaped flexible inliner (28) in the lower retrieval region has a wall recess (34), directed inward and adapted so as to correspond with the protective-housing-shaped molding (26) of the rigid plastics-material internal container (12), having two lateral wall parts (36), an upper wall part (38), and a rearward wall part (40) having a flexible retrieval connector (42) molded thereon, and is configured so as to bear completely in an exact fit on the internal surface of the molding (26) that protrudes in a protective-housing manner into the interior of the rigid plastics-material internal container (12).

12. Method for inserting a new inliner (28) according to one of preceding Claims 1 to 10 into a pallet container according to Claim 11,
**characterized in that** the inliner (28) after insertion and welding to the rigid filling connector (30) and retrieval connector (32) of the plastics-material internal container (12) is inflated using compressed air, and excess air is removed without residue by vacuum pumps from the intermediate space between the external surface of the inliner (28) and the internal surface of the plastics-material internal container (12) until no air and no intermediate space remains between the inliner (28) and the plastics-material internal container (12) such that a stable vacuum is set, said vacuum, upon gas-tight closure of the container opening by way of which the excess air has been evacuated, being durably maintained during the entire intended use of the pallet container (10) until the next replacement of the used inliner (28).

## Revendications

1. Garniture intérieure souple (28) de forme cubique constituée d'un film en matière synthétique comprenant une tubulure de remplissage (44) supérieure et une tubulure de prélèvement (42) inférieure pour un conteneur sur palette (10) pour le stockage et le transport de produits de remplissage liquides ou coulants, comprenant un récipient intérieur (12) rigide à parois minces en matière synthétique thermoplastique, comprenant un cadre en treillis tubulaire (14) entourant étroitement le récipient intérieur (12) en matière synthétique en tant qu'enveloppe de support, lequel cadre est constitué de barres tubulaires (18, 20) horizontales et verticales soudées les unes aux autres, et comprenant une palette de fond (16) rectangulaire sur laquelle repose le récipient intérieur (12) en matière synthétique et à laquelle le cadre en treillis tubulaire (14) est relié solidement, dans laquelle le récipient intérieur (12) en matière synthétique de forme cubique comprend deux parois latérales plus longues, une paroi arrière plus courte, une paroi avant plus courte, un fond supérieur doté d'une tubulure de remplissage (30) pouvant être fermée et un fond de récipient, dans laquelle une région de prélèvement inférieure dotée d'un évidement (26) en forme de boîtier de protection orienté vers l'intérieur dans le récipient intérieur (12) en matière synthétique est prévue du côté du fond au milieu de la paroi avant pour l'agencement en retrait protégé d'un robinet de prélèvement (24) pouvant être fermé,
**caractérisée en ce que**
la garniture intérieure souple (28) de forme cubique comprend, dans la région de prélèvement inférieure, un renfoncement de paroi (34) orienté vers l'intérieur et pouvant être adapté de manière correspondante à l'évidement (26) en forme de boîtier de protection du récipient intérieur (12) en matière synthétique rigide, comprenant deux parties de paroi latérales (36), une partie de paroi supérieure (38) et une partie de paroi arrière (40) sur laquelle est formée la tubulure de prélèvement souple (42), qui permettent de former le renfoncement de paroi (34) adapté pour l'appui complet de façon précise contre la surface intérieure de l'évidement (26) en forme de boîtier de protection faisant saillie à l'intérieur du récipient intérieur (12) en matière synthétique rigide.

2. Garniture intérieure selon la revendication 1,
**caractérisée en ce que**
la garniture intérieure souple (28) de forme cubique est soudée ensemble à partir de trois pièces découpées et comporte une partie de couvercle horizontale supérieure (46) dotée d'une tubulure de remplissage (44) souple centrale, une partie de fond (48) horizontale inférieure dotée d'une cavité (50) correspondant à la forme de fond du renfoncement de paroi (34) et une pièce découpée (52) de paroi latérale périphérique verticalement dotée de parties de surface pour les deux parties de paroi latérales (36), la partie de paroi supérieure (38) et la partie de paroi arrière (40) du renfoncement de paroi (34) de la garniture intérieure (28).

3. Garniture intérieure selon la revendication 1 ou 2,
**caractérisée en ce que**
les trois pièces découpées sont soudées ensemble respectivement à l'aide d'un joint de soudure (54, 56) supérieur et inférieur entourant horizontalement le bord extérieur de la partie de couvercle supérieure (46) et le bord extérieur de la partie de fond inférieure (48) et sont, pour fermer la pièce découpée (52) de paroi latérale, soudées ensemble à l'aide d'un joint de soudure (58) s'étendant de haut en bas verticalement au centre de la paroi avant et passant par le centre du renfoncement de paroi (34).

4. Garniture intérieure selon la revendication 1 ou 2,
**caractérisée en ce que**
les trois pièces découpées sont soudées ensemble respectivement à l'aide d'un joint de soudure (54, 56) supérieur et inférieur entourant horizontalement le bord extérieur de la partie de couvercle supérieure (46) et le bord extérieur de la partie de fond inférieure (48) et sont, pour fermer la pièce découpée (52) de paroi latérale, soudées ensemble à l'aide d'un joint de soudure s'étendant de haut en bas verticalement au centre de la paroi arrière, une soudure (60) s'étendant verticalement de haut en bas à l'exception du renfoncement de paroi (34) étant prévue au centre de la paroi avant.

5. Garniture intérieure selon la revendication 1, 2, 3 ou 4,
**caractérisée en ce que**
la longueur du joint de soudure horizontal supérieur (54) est plus courte que la longueur du joint de soudure horizontal inférieur (56), ou la périphérie supérieure de joint de soudure de la partie de couvercle supérieure (46) est plus courte que la périphérie inférieure de joint de soudure de la partie de fond inférieure (48) et le joint de soudure (58) vertical avant de la pièce découpée (52) de paroi latérale est plus long que la hauteur du cube de garniture intérieure.

6. Garniture intérieure selon la revendication 1, 2, 3, 4 ou 5,
**caractérisée en ce que**
dans le cas d'une garniture intérieure (28) de volume de produit de remplissage de 1000 l, la longueur du joint de soudure horizontal supérieur (54), c'est-à-dire la périphérie supérieure de joint de soudure (SNUo), est de 4100 à 4150 mm, la longueur du joint de soudure horizontal inférieur (56), c'est-à-dire la périphérie inférieure de joint de soudure (SNUu), est d'environ 4265 à 4310 mm et le joint de soudure vertical avant (58) est d'environ 800 à 1100 mm de long.

7. Garniture intérieure selon l'une des revendications précédentes 1 à 6,
**caractérisée en ce que**
pour un volume de produit de remplissage d'environ 1000 l, la garniture intérieure souple (28) présente une forme cubique d'une longueur (LI) de 1150 à 1190 mm, une largeur (BI) de 950 à 1050 mm et une hauteur (HI) de 950 à 1050 mm et sa paroi est soudée ensemble à partir de trois pièces découpées.

8. Garniture intérieure selon l'une des revendications précédentes 1 à 7,
**caractérisée en ce que**
la garniture intérieure souple (28) comprend une tubulure de remplissage supérieure (44) présentant un diamètre d'environ 145 mm ou 225 mm et une longueur de 290 à 310 mm ainsi qu'une tubulure de prélèvement souple inférieure (42) présentant un diamètre d'environ 2", 3" ou 145 mm et une longueur d'au moins 100 mm.

9. Garniture intérieure selon l'une des revendications précédentes 1 à 8,
**caractérisée en ce que**
la garniture intérieure souple (28) est soudée, par sa tubulure de remplissage supérieure (44), par liaison de matière sur la tubulure de remplissage supérieure (30) du récipient intérieur (12) en matière synthétique rigide et, par sa tubulure de prélèvement souple inférieure (42), par liaison de matière sur la tubulure de prélèvement inférieure (32) du récipient intérieur (12) en matière synthétique rigide respectivement de manière étanche aux gaz et aux liquides, tandis que toute la surface extérieure de la garniture intérieure insérée (28) est en contact fonctionnel avec toute la surface intérieure du récipient intérieur (12) en matière synthétique et est reliée à force avec celle-ci.

10. Garniture intérieure selon l'une des revendications précédentes 1 à 9,
**caractérisée en ce que**
la tubulure de remplissage souple supérieure (44) et la tubulure de prélèvement souple inférieure (42) de la garniture intérieure souple (28) sont fabriquées en tant que film tubulaire constitué du même matériau composite en film à plusieurs couches présentant les mêmes propriétés de barrière que le matériau composite en film à plusieurs couches de la garniture intérieure souple (28) .

11. Conteneur sur palette (10) pour le stockage et le transport de produits de remplissage liquides ou coulants comprenant un récipient intérieur (12) rigide à parois minces en matière synthétique thermoplastique, comprenant un cadre en treillis tubulaire (14) entourant étroitement le récipient intérieur (12) en matière synthétique en tant qu'enveloppe de support, lequel cadre est constitué de barres tubulaires (18, 20) horizontales et verticales soudées les unes aux autres, et comprenant une palette de fond (16) rectangulaire sur laquelle repose le récipient intérieur (12) en matière synthétique et à laquelle le cadre en treillis tubulaire (14) est relié solidement, dans lequel le récipient intérieur (12) en matière synthétique de forme cubique comprend deux parois latérales plus longues, une paroi arrière plus courte, une paroi avant plus courte, un fond supérieur doté d'une tubulure de remplissage (30) pouvant être fermée et un fond de récipient, dans lequel une région de prélèvement inférieure dotée d'un évidement (26) en forme de boîtier de protection orienté vers l'intérieur dans le récipient intérieur (12) en matière synthétique est prévue du côté du fond au milieu de la paroi avant pour l'agencement en retrait protégé d'un robinet de prélèvement (24) pouvant être fermé, et dans lequel une garniture intérieure souple (28) de forme cubique constituée d'un film en matière synthétique et dotée d'une tubulure de remplissage (44) supérieure et d'une tubulure de remplissage (42) inférieure selon l'une des revendications précédentes 1 à 12 est insérée dans le récipient intérieur (12) rigide,
**caractérisé en ce que**
la garniture intérieure souple (28) de forme cubique comprend, dans la région de prélèvement inférieure, un renfoncement de paroi (34) orienté vers l'intérieur et adapté de manière correspondante à l'évidement (26) en forme de boîtier de protection du récipient intérieur (12) en matière synthétique rigide, comprenant deux parties de paroi latérales (36), une partie de paroi supérieure (38) et une partie de paroi arrière (40) sur laquelle est formée la tubulure de prélèvement souple (42), qui est réalisée de manière à s'appuyer complètement de façon précise contre la surface intérieure de l'évidement (26) faisant saillie en forme de boîtier de protection dans l'intérieur du récipient intérieur (12) en matière synthétique rigide.

12. Procédé d'insertion d'une nouvelle garniture intérieure (28) selon l'une des revendications précédentes 1 à 10 dans un conteneur sur palette selon la revendication 11,
**caractérisé en ce que**
la garniture intérieure (28) est, après l'insertion et le soudage sur les tubulures de remplissage et de prélèvement rigides (30, 32) du récipient intérieur (12) en matière synthétique, gonflée avec de l'air comprimé et, au moyen de pompes à vide, l'air en excès est retiré complètement de l'espace intermédiaire entre la surface extérieure de la garniture intérieure (28) et la surface intérieure du récipient intérieur (12) en matière synthétique jusqu'à ce qu'il n'existe plus aucun air et plus aucun espace intermédiaire entre la garniture intérieure (28) et le récipient intérieur (12) en matière synthétique, de telle sorte qu'un vide stable soit réglé, lequel est, après la fermeture étanche aux gaz de l'ouverture de récipient par le biais de laquelle l'air en excès a été évacué, maintenu de manière permanente pendant toute l'utilisation prévue du conteneur sur palette (10) jusqu'au remplacement suivant de la garniture intérieure usagée (28).
